# EUROPEAN PATENT APPLICATION

(11) **EP 4 727 151 A1**
(43) Date of publication of application: **15.04.2026**
(21) Application number: 24818581.1
(22) Date of filing: 31.05.2024
(51) Int. Cl.: H04N 23/741, H04N 19/186

(54) **MEDIA DATA PROCESSING METHOD AND APPARATUS, ELECTRONIC DEVICE, AND READABLE STORAGE MEDIUM**

(30) Priority: 06.06.2023 CN 202310667267
(71) Applicant: Vivo Mobile Communication Co., Ltd., Dongguan, Guangdong 523863 (CN)
(72) Inventor: ZHONG, Nanjun, Dongguan, Guangdong 523863 (CN)
(74) Representative: Lavoix
(86) International application number: PCT/CN2024/096773
(87) International publication number: WO 2024/251049

(57) **Abstract**

This application discloses a media data processing method and apparatus, an electronic device, and a readable storage medium, pertaining to the technical field of information processing. The method includes: acquiring first media data and a gain data stream; determining stream description information of the gain data stream based on the gain data stream; and generating a first file based on the first media data, the gain data stream, and the stream description information, and storing the first file, where the first file includes: the first media data, the gain data stream, the stream description information, a first check code associated with the gain data stream, and a second check code associated with the stream description information; where the first check code is used to identify the associated gain data stream in the first file; and the second check code is used to identify the associated stream description information in the first file.

## Description

This application claims priority to Chinese Patent Application No. 202310667267.5, filed on June 6, 2023 and entitled "MEDIA DATA PROCESSING METHOD AND APPARATUS, ELECTRONIC DEVICE, AND READABLE STORAGE MEDIUM", which is incorporated herein by reference in its entirety.

### TECHNICAL FIELD

This application pertains to the technical field of data processing, and specifically relates to a media data processing method and apparatus, an electronic device, and a readable storage medium.

### BACKGROUND

In related technologies, for an extended display function of high dynamic range (High Dynamic Range, HDR), a gain map (Gainmap) is added and stored in images, such as JPEG images.

However, due to different sizes of Gainmaps for different images, after the Gainmaps are stored, finding a specified Gainmap requires operations such as decoding and identification on all Gainmaps. Consequently, the Gainmap storage method in the related art has difficulty in searching for a specified Gainmap.

### SUMMARY

Embodiments of this application is to provide a media data processing method and apparatus, an electronic device, and a readable storage medium, to rapidly locate gain data streams and stream description information in media data, facilitating the search for such media data.

According to a first aspect, an embodiment of this application provides a media data processing method. The method includes:
acquiring first media data and a gain data stream;
determining stream description information of the gain data stream based on the gain data stream; and
generating a first file based on the first media data, the gain data stream, and the stream description information, and storing the first file, where the first file includes: the first media data, the gain data stream, the stream description information, a first check code associated with the gain data stream, and a second check code associated with the stream description information; where
the first check code is used to identify the associated gain data stream in the first file; and the second check code is used to identify the associated stream description information in the first file.

According to a second aspect, an embodiment of this application provides a media data processing apparatus, the apparatus including:
an acquisition module configured to acquire first media data and a gain data stream;
a first determining module configured to determine stream description information of the gain data stream based on the gain data stream; and
a data processing module configured to generate a first file based on the first media data, the gain data stream, and the stream description information, and store the first file, where the first file includes: the first media data, the gain data stream, the stream description information, a first check code associated with the gain data stream, and a second check code associated with the stream description information; where
the first check code is used to identify the associated gain data stream in the first file; and the second check code is used to identify the associated stream description information in the first file.

According to a third aspect, an embodiment of this application provides an electronic device. The electronic device includes a processor and a memory, where the memory stores a program or instructions capable of running on the processor, and when the program or instructions are executed by the processor, the steps of the method as described in the first aspect are implemented.

According to a fourth aspect, an embodiment of this application provides a readable storage medium, where the readable storage medium stores a program or instructions, and when the program or instructions are executed by a processor, the steps of the method described in the first aspect are implemented.

According to a fifth aspect, an embodiment of this application provides a chip. The chip includes a processor and a communication interface, the communication interface is coupled to the processor, and the processor is configured to run a program or instructions to implement the method described in the first aspect.

According to a sixth aspect, an embodiment of this application provides a computer program product, where the program product is stored in a storage medium, and the program product is executed by at least one processor to implement the method described in the first aspect.

In the embodiments of this application, the first check code associated with the gain data stream and the second check code associated with the stream description information are added in the first file. In this way, in case that the gain data stream needs to be used to perform gain adjustment on the first media data in the first file, the stream description information of each gain data stream can be found in the first file based on the second check code, the target gain data stream can be selected based on the stream description information, and the target gain data stream can be found in the first file based on the first check code associated with the target gain data stream. This allows searching for and reading of the target gain data stream from the first file, without having to perform operations such as decoding and identification on all the gain data streams in the first file.

### BRIEF DESCRIPTION OF DRAWINGS

FIG. 1 is a flowchart of a media data processing method according to an embodiment of this application;
FIG. 2 is a schematic diagram of a structure of a JPEG file;
FIG. 3 is a first schematic diagram of a structure of a first file according to an embodiment of this application;
FIG. 4 is a second schematic diagram of a structure of a first file according to an embodiment of this application;
FIG. 5 is a third schematic diagram of a structure of a first file according to an embodiment of this application;
FIG. 6 is a schematic diagram of a structure of extended information according to an embodiment of this application;
FIG. 7 is a schematic structural diagram of a media data processing apparatus according to an embodiment of this application;
FIG. 8 is a schematic structural diagram of an electronic device according to an embodiment of this application; and
FIG. 9 is a schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or more first objects. In addition, "and/or" in the specification and claims indicates at least one of the connected objects, and the character "/" generally indicates that the associated objects before and after it are in an "or" relationship.

A high dynamic photo display function can be understood as an extended display function of HDR. In an Android (Android) system, a unified standard has been established for storing Gainmap in JPEG-R, that is, storing a Gainmap after JPEG data. When a Gainmap is being read, data content in a JPEG file is decoded and identified to obtain data content of the Gainmap. Additionally, the ISO standardization organization is also formulating Gainmap-related standards.

However, the storage of Gainmap in the related technologies has at least the following issues:
(1) During adding and storing of a Gainmap in an image file, such as a JPEG file, due to varying sizes of Gainmaps, it is inconvenient to find a Gainmap and extend the Gainmap after the Gainmap is stored in a JPEG file.
(2) There is no unified standard for the size of Gainmaps, making it impossible to store multiple Gainmaps in a same JPEG file. For example, if multiple Gainmaps exist in the same JPEG file, it is impossible to distinguish between different Gainmaps in the file.

In an embodiment of this application, a new storage standard is proposed to identify a gain data stream, including a data stream (stream) of a Gainmap or other types of gain data, and stream description information of the gain data stream. In this way, the associated stream description information can be accurately located in the stored media file (that is, a first file) based on a check code associated with the stream description information, a required target gain data stream can be found based on the stream description information, and then the target gain data stream can be accurately located in the stored media file (that is, the first file) based on a check code associated with the target gain data stream.

The following details a media data processing method and apparatus, an electronic device, and a readable storage medium according to the embodiments of this application with reference to the accompanying drawings through specific embodiments and application scenarios thereof.

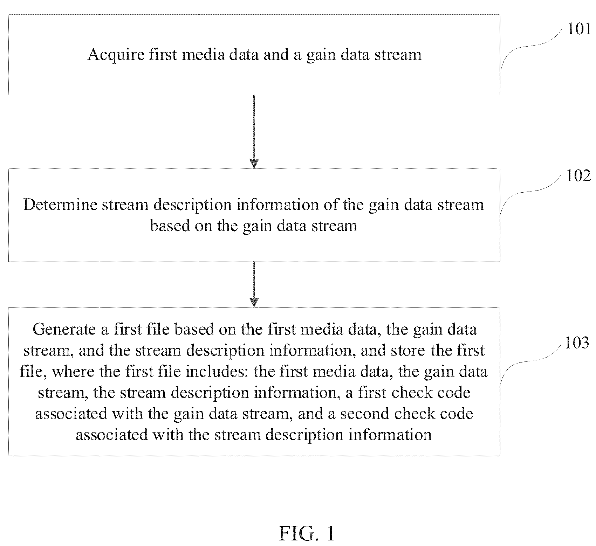

Referring to FIG. 1, a media data processing method according to an embodiment of this application may include the following steps.

Step 101: Acquire first media data and a gain data stream.

In some implementations, the first media data may be media data such as an image, an audio, or a video. For ease of description, the embodiments of this application generally use the first media data being an image, such as a JPEG image, as an example for description, which does not constitute a specific limitation.

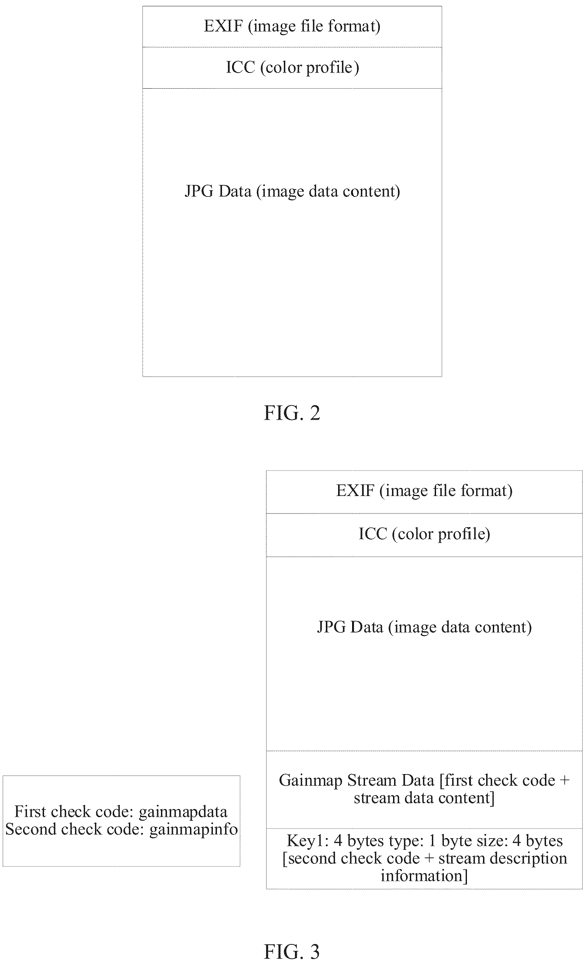

For example, the first media data is an image generated upon completion of a photographing operation. Assuming that the image is in JPEG format, FIG. 2 is a schematic diagram of a structure of a JPEG file corresponding to the image.

The gain data stream may be used to perform gain adjustment on the first media data. For example, in a case that the first media data is a JPEG image, the gain data stream may be a Gainmap stream, and a brightness gain in the JPEG image can be adjusted based on the Gainmap stream, thereby implementing a high dynamic range image display function.

It should be noted that a type of gain data stream is related to a type of first media data. For example, for images, image-related gain data streams, such as Gainmap streams or watermark streams, may be used; for audio, audio-related gain data streams may be used; for video, video-related gain data streams may be used.

For example, during a process of capturing a photo, upon completion of the capture, an image is generated, and a Gainmap stream in RGBA format is generated.

The gain data stream in the first file may be a Gainmap stream in RGBA format, a Gainmap stream in YUV format, or data obtained by encoding a Gainmap stream in YUV format.

Specifically, in the media data processing method according to the embodiments of this application, a Gainmap stream can be converted from RGBA format to YUV format, and the Gainmap stream in YUV format is encoded into a format such as JPEG or PNG, and then appended after image data content in the JPEG file, that is, after JPEG DATA. Alternatively, the Gainmap stream in YUV format may not be encoded, but is appended after JPEG DATA in the JPEG file. Alternatively, the RGBA format Gainmap stream may be directly appended after the JPEG DATA in the JPEG file.

The formats of the Gainmap streams in the JPEG file may be shown in Table 1 below.

**Table 1**

| Value (Value) | Tag (tag) | Description |
|---|---|---|
| 0x00 | RGBA | |
| 0x01 | JPG | |
| Ox02 | PNG | |
| 0x03 | YUV | |
| 0x04 | Bitmap | |
| 0x05 | GRAY | |
| 0x06 | CaliData | |
| 0x0A | Params | Function parameters, with the content format defined by the function |

For ease of description, in the embodiments of this application, a Gainmap stream in JPEG format being appended after the JPEG DATA in the JPEG file is used as an example for description, which does not constitute a specific limitation.

It should be noted that for ease of description, the embodiments of this application generally use the first media data being an image and the gain data stream being an image-related gain data stream such as a Gainmap stream or a watermark stream, as an example for description. The type of gain data stream and the type of the first media data are not limited herein.

In one implementation, one or at least two gain data streams may be used.

For example, the gain data stream includes a Gainmap stream and other gain streams, where the other gain streams may be streams different from the Gainmap stream, such as watermark streams.

For another example, the gain data stream includes at least two Gainmap streams of different sizes, such as a full-size (Full size) Gainmap stream, a 1/2 size Gainmap stream, or a 1/4 size Gainmap stream.

Step 102: Determine stream description information of the gain data stream based on the gain data stream.

The stream description information may be used to describe characteristics of the gain data stream, such as the purpose, encoding format, or number of channels of the gain data stream. In this way, a gain data stream meeting a requirement can be found based on stream description information.

Optionally, the stream description information includes at least one of the following:
a target identifier of the gain data stream;
a type of the gain data stream;
a service corresponding to the gain data stream;
a size of the gain data stream;
a module using the first file;
a declaration entity of the gain data stream; and
attribute information of the gain data stream.

The target identifier is used to uniquely identify each gain data stream in the first file. For example, if the gain data stream is a Gainmap stream, the target identifier is a key (key) of the Gainmap stream.

Optionally, the key may be pre-associated with the type, data format, or the like of the Gainmap stream, for example, the stream description information shown in Table 2 below.

**Table 2**

| Key value | Type | Type description | Service | Service description | Details | Module | Declaration entity | Remarks |
|---|---|---|---|---|---|---|---|---|
| 0x00030001 | 0x0003 | Gainmap | 0x0001 | Gainmap data | Size of Gainmap stream data | Photo album, camera | XXX | XDR2.0 parameters |

As shown in Table 2, the first four bytes "0x0003" in the key "0x00030001" are used to indicate that the type of the gain data stream is Gainmap stream, and the last four bytes "0x0001" is used to indicate the service type of the Gainmap stream, such as specific purposes of the Gainmap stream. In other words, the key can be divided into two parts: one part is used to indicate the general type of the stream, and the other part is used to indicate the specific type of the stream within that general category.

The size of Gainmap stream data in Table 2 may be the number of bits (bit) of the Gainmap stream data.

The module using the first file may indicate a module that needs to use the first file, such as a photo album application (Application, App) or a camera App.

The declaration entity may be a manufacturer of the electronic device performing the media data processing method provided in the embodiments of this application.

The remarks in Table 2 may record attribute information of the gain data stream, for example, XDR2.0 parameters, indicating that the gain data stream is a Gainmap stream defined according to the XDR2.0 rule, where XDR2.0 may be a definition rule for parameters in the Gainmap stream, that is, extreme dynamic range (Extreme Dynamic Range, XDR) version 2.0.

Step 103: Generate a first file based on the first media data, the gain data stream, and the stream description information, and store the first file, where the first file includes: the first media data, the gain data stream, the stream description information, a first check code associated with the gain data stream, and a second check code associated with the stream description information; where the first check code is used to identify the associated gain data stream in the first file; and the second check code is used to identify the associated stream description information in the first file.

In one implementation, the gain data stream, the stream description information, the first check code associated with the gain data stream, and the second check code associated with the stream description information may be appended after the first media data to form the first file. Since the encoded stream of the Gainmap is stored at the end of the original JPEG image, normal display of the original image is not affected.

In one implementation, the association of the first check code with the gain data stream may be implemented by appending a fixed first check code before each gain data stream.

Similarly, the association of the second check code with the stream description information may be implemented by appending a fixed second check code before the stream description information of each gain data stream.

For example, as shown in FIG. 3, it is assumed that: the first media data is image data, the first check code is the string "Gainmapdata", and the second check code is the string "Gainmapinfo". Then "Gainmapdata + data content of the gain data stream" may be appended after the image data content: JPG data, and then "Gainmapinfo + stream description information" is appended after "Gainmapdata + data content of the gain data stream". In this way, the stream description information of the gain data stream in the first file can be accurately located by identifying Gainmapinfo, and the data content of the gain data stream in the first file can be accurately located by identifying Gainmapdata.

In an optional implementation, one or at least two gain data streams may be used.

Optionally, the first file further includes: N and a third check code associated with N, where N is a positive integer; and
a value of N is the number of gain data streams in the first file, and the third check code is used to identify the associated N in the first file.

In this implementation, multiple Gainmap streams or other streams can be written into an image file (for example, a JPEG file) and combined into a method that allows quick access to any required stream without affecting the original file.

For example, open the camera preview interface, enter a mode that requires generating multiple Gainmap streams, or generating one Gainmap stream and another stream, such as a watermark stream, and press the capture button to take a photo. During the photographing process, at least one Gainmap is generated, where different Gainmaps may be generated in different sizes, such as Full Size, 1/4 Size, or 1/16 Size Gainmap streams, and possibly accompanied by a watermark stream. In this case, the captured photo, Gainmap streams of different sizes, and the watermark stream need to be packaged into the first file.

Optionally, an initial value of N may be equal to 0, and the value of N increases by 1 each time one stream is generated, so the value of N can change with the number of streams.

Through this implementation, N can be used to indicate the number of gain data streams in the first file, and N can be accurately located in the first file through the third check code.

Optionally, after the storing the first file, the method further includes:
reading the first file;
determining target gain stream data based on the third check code, the value of N, N second check codes and respective stream description information, and N first check codes and respective gain data streams;
adjusting a gain of the first media data based on the target gain stream data to obtain second media data; and
outputting the second media data.

In one implementation, the reading order of the first file may be from back to front, that is, the reading order is as follows: the third check code, the value of N, the N second check codes and respective stream description information, the N first check codes and respective gain data streams, and the first media data.

In another implementation, the first media data may be read first, followed by sequentially reading: the third check code, the value of N, the N second check codes and respective stream description information, and the N first check codes and respective gain data streams, so as to find and read the required target gain data stream based on the third check code, the second check code, the stream description information, and the first check code.

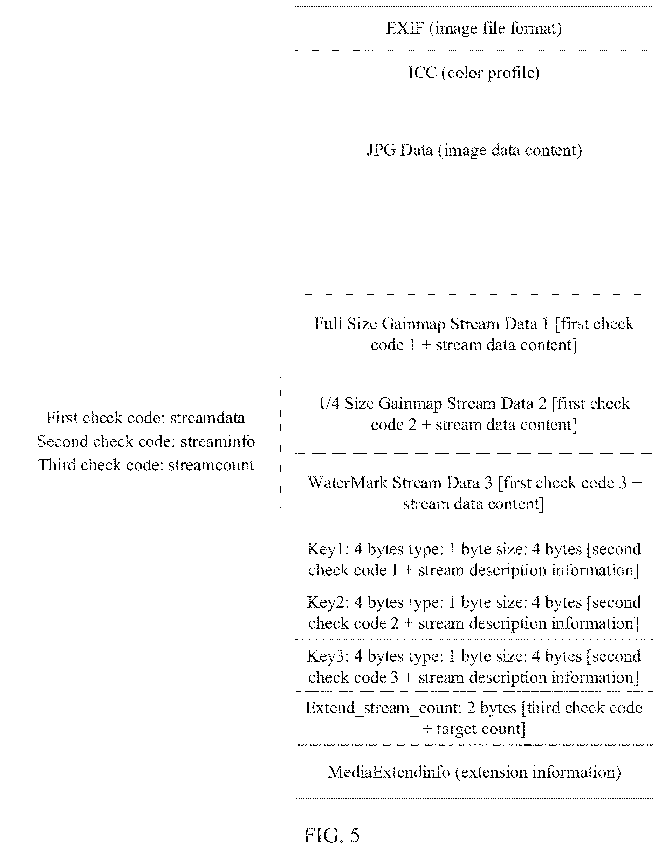

For example: The third check code, such as the string "streamcount" shown in FIG. 5, may be identified first from the first file, and N is read based on the identified third check code. Based on the value of N, it is determined that the number of gain data streams in the first file is equal to N, and subsequently, N second check codes can be found, and the stream description information associated with the N second check codes is read from the first file, thereby finding the required target gain data stream based on the N pieces of stream description information. Finally, the target gain data stream is found in the first file based on the first check code associated with the target gain data stream.

In one implementation, a same gain data stream and its stream description information may be stored in adjacent positions in the first file. In this way, when it is determined that the gain data stream described by the target stream description information is the required gain data stream, the gain data stream adjacent to the target stream description information can be determined as the target gain data stream.

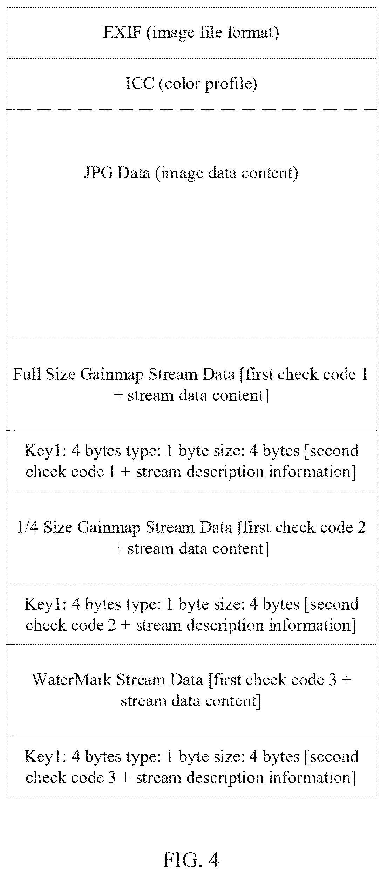

For example, as shown in FIG. 4, assuming that N is equal to 3, data content of the three gain data streams, their first check codes and respective stream description information, and their second check codes, are located in adjacent storage areas in the first file. In this case, for a specific gain data stream, the storage order of the first check code, the data content of the gain data stream, the second check code, and the stream description information is: first check code + data content of the gain data stream -> second check code + stream description information.

In another implementation, in a case that N is an integer greater than 1, the first file includes the following information arranged in sequence:
the first media data, N first check codes and respective gain data streams, N second check codes and respective stream description information, the third check code, and the associated N.

In one implementation, the method of outputting the second media data may be determined based on a data type of the second media data. For example, in a case that the second media data is an image, the image may be displayed on a display; in a case that the second media data is audio data, the audio may be played through a speaker.

In another implementation, the outputting the second media data may be transmitting the processed second media data to another device via wired transmission or over-the-air transmission, which is not elaborated further herein.

In this implementation, N gain data streams may be stored sequentially in a specified order, and then N pieces of stream description information are stored in the same order after the N gain data streams. In this way, when it is determined that a gain data stream described by the i-th piece of stream description information is the required gain data stream, the i-th gain data stream can be determined as the target gain data stream.

For example, as shown in FIG. 5, assuming that N is equal to 3, three first check codes + data content of gain data streams are inserted after JPG data, and then three second check codes + stream description information are inserted after the three first check codes + data content of gain data streams.

It should be noted that the determining target gain stream data based on the third check code, the value of N, N second check codes and respective stream description information, and N first check codes and respective gain data streams may be determining the target gain stream data based on the third check code, and some or all content of the second check codes and stream description information, and the first check codes and gain data streams.

For example, if multiple streams are stored in a JPEG file in a way shown in FIG. 4, a problem arises: when multiple streams exist, to find one required stream, it is necessary to search for all streams one by one. This causes the read pointer in the buffer (buffer) to move continuously and requires full parsing of all content in the stream description information, including length information. In contrast, in the storage structure shown in FIG. 5, only the keys in all stream description information need to be read sequentially, and the required stream can be found based on the key. Therefore, the storage structure shown in FIG. 5 reduces complexity of finding gain data streams, compared to the storage structure shown in FIG. 4.

In some implementations, the determining target gain stream data based on the third check code, the value of N, the N second check codes and respective stream description information, and the N first check codes and respective gain data streams includes:
reading N from the first file based on the third check code;
reading N second check codes from the first file;
reading, based on the N second check codes, target identifiers in the respective associated stream description information from the first file;
selecting a target gain data stream from the N gain data streams based on the target identifiers of the N gain data streams; and
reading the target gain data stream from the first file based on the first check code associated with the target gain data stream.

In one implementation, the target identifier is a key. The specific content of the key is shown in Table 2. It can be seen that based on the keys in one-to-one correspondence with the gain data streams and the information such as the types and service types of the gain data streams described by the keys, the target gain data stream can be selected.

The association between the keys and information such as the types and service types of the gain data streams may be pre-stored in a device performing the media data processing method provided in the embodiments of this application. In this way, in a case that a key is identified, information such as a type and a service type of a gain data stream reflected by the key can be obtained. For example, when one stream needs to be found from multiple streams, since each stream has its own key, an encoding format of each stream can also be determined based on a correspondence between the 4-byte values and tags in the keys shown in Table 1. In this way, the gain data streams can be found by simply looking up each key in the stream description information.

For example, as shown in Table 3 below, the stream description information of multiple streams includes their respective keys, where the key of each stream can be divided into two parts: one part (the first four bytes) is used to indicate the general type of the stream, such as Gainmap Stream, initJpeg (initJpeg) Stream, DepthMap (DepthMap) Stream, perWatermarkBokehJpeg (perWatermarkBokehJpeg) Stream, LogoWaterMark (LogoWaterMark), TimeWaterMark (TimeWaterMark), horizontalTimeFrameWaterMark (horizontalTimeFrameWaterMark) Stream, flare portrait postdata (postdata) Stream, or DocParams (DocParams) Stream; and the other part (the last four bytes) is used to indicate the specific category of the stream, such as full size Gainmap data, 1/4 size Gainmap, regular image as watermark background crop, dual-camera image as image without watermark or bokeh, dual-camera bokeh depth map, cropped background image at the watermark area after bokeh, logo (logo) watermark, time and location watermark, time and location watermark for frame watermarks, horizontal bitmap (bitmap), flare portrait postdata, an original image before super-resolution document correction, or parameters for super-resolution documents.

**Table 3**

| Key value | Type | Type description | Service | Service description | Module | Remarks |
|---|---|---|---|---|---|---|
| 0x00030001 | 0x0003 | Gainmap | 0x0001 | Full size Gainmap data | Photo album, camera | XDR2.0 parameters |
| 0x00030002 | 0x0003 | Gainmap | 0x0002 | 1/4 size Gainmap | Photo album, camera | XDR2.0 parameters |
| 0x00020001 | 0x0002 | initJpeg | 0x0001 | Regular image as watermark background crop, dual-camera image as image without watermark or bokeh | Photo album, camera | Photo album watermark removal |
| 0x00020002 | 0x0002 | DepthMap | 0x0002 | Dual-camera bokeh depth map | Photo album, camera | Photo album watermark removal |
| 0x00020003 | 0x0002 | perWatermarkBokehJpeg | 0x0003 | Dual-camera bokeh image, cropped background image at watermark area after bokeh | Photo album, camera | Photo album watermark removal |
| 0x00020004 | 0x0002 | LogoWaterMark | 0x0004 | Logo watermark | Photo album, camera | Photo album watermark removal |
| 0x00020005 | 0x0002 | TimeWaterMark | 0x0005 | Time and location watermark | Photo album, camera | Photo album watermark removal |
| 0x0002000A | 0x0002 | horizontal TimeFrame WaterMark | 0x000A | Time and location watermark for frame watermark, horizontal bitmap | Camera | Frame watermark, portrait refocus (refocus) editing |
| 0x00020012 | 0x0002 | Flare portrait postdata | 0x0012 | Flare portrait postdata | Camera | Bokeh editing |
| 0x00030001 | 0x0003 | Gainmap | 0x0001 | Gainmap data | Photo album, camera | XDR2.0 parameters |
| 0x00040001 | 0x0004 | initJpeg | 0x0001 | Original image before super-resolution document correction | Photo album, camera | Super-resolution document packaging |
| 0x00040064 | 0x0004 | DocParams | 0x0064 | Parameters for super-resolution document | Photo album, camera | Super-resolution document packaging |

For example, assuming that the first media data is a JPEG image, if a logo watermark needs to be removed from the JPEG image, a stream used to implement the logo (logo) watermark can be found as a watermark data stream based on a key, and a pixel gain in the JPEG image can be adjusted based on the logo watermark stream to obtain a JPEG image with the logo watermark removed.

In this implementation, simply identifying the target identifier in the stream description information allows for selection of the target gain data stream based on the type of the gain data stream corresponding to the target identifier information, thereby improving the speed of finding the required target gain data stream.

In an optional implementation, the first file further includes extension information, where the extension information includes at least one of the following:
compatibility information with a historical version;
extended information;
a length of the extended information;
a fourth check code associated with the extended information, where the fourth check code is used to identify the associated extended information in the first file; and
a fifth check code, where the fifth check code is used to verify validity of the first file.

In one implementation, the extension information (MediaExtendInfo) may serve as reserved extension information or be used to store setting (setting) information of meta (Meta) data. For example, the extended information may specifically include at least one of the following meta data: an average gain, a maximum gain, a minimum gain, and the like of the gain data stream.

Optionally, the extended information may adopt a form similar to the key:value form described above. To be specific, a correspondence between each type of extended information content and its respective first identifier is prestored, and the first identifier is inserted into the extension information. In this way, the specific content of the extended information can be obtained based on the first identifier and the pre-stored correspondence between the first identifier and the extended information content.

In one implementation, adding the compatibility information with a historical version to the extension information allows compatibility with a media data file of the historical version. The media data file of a historical version may be a media data file with a framework structure other than the framework structure of the first file stored using the media data processing method provided in the embodiments of this application, such as a media data file that does not include at least one of the first check code, the second check code, and the third check code.

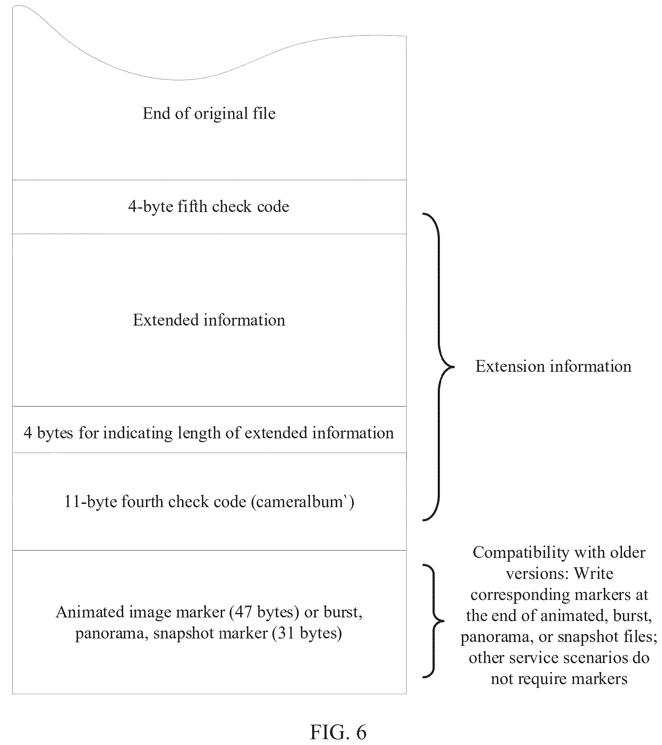

For example, as shown in FIG. 6, the extension information includes, from back to front: fixed compatibility information for older versions, followed by a fixed fourth check code "cameralbum'", then the 4-byte length of the extended information, then the content of the extended information, and then a fixed fifth check code "XXXX".

The fifth check code may be used to verify security of the first file. For example, in a case that the fourth check code "cameralbum'" is identified, the content of the extended information is read based on the length of the extended information; and in a case that the fifth check code "XXXX" is identified, it is determined that the first file is a file provided by a trusted entity, and thus other content after the extension information in the first file, such as the third check code, second check code, stream description information, first check code, or gain data stream, is read; if the fifth check code "XXXX" is not identified, the reading of other content after the extension information in the first file may be terminated.

Through the media data processing method provided in the embodiments of this application, on the one hand, the stream data and its stream description information in the first file can be identified based on the first check code and the second check code, simplifying the difficulty of finding streams. On the other hand, in a case that one piece of media data includes at least two streams, orderly management, verification, and locating of the at least two streams can be performed, and storage and transmission of meta or setting data can be implemented, facilitating the extension, transmission, and management of images.

The media data processing method provided in the embodiments of this application may be executed by a media data processing apparatus. In the embodiments of this application, the media data processing apparatus performing the media data processing method is taken as an example to describe the media data processing apparatus provided in the embodiments of this application.

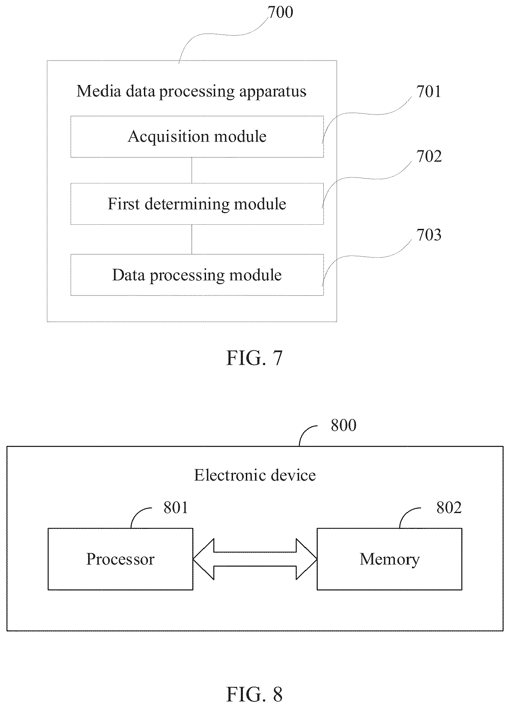

As shown in FIG. 7, a media data processing apparatus 700 according to an embodiment of this application may include the following modules:
an acquisition module 701 configured to acquire first media data and a gain data stream;
a first determining module 702 configured to determine stream description information of the gain data stream based on the gain data stream; and
a data processing module 703 configured to generate a first file based on the first media data, the gain data stream, and the stream description information, and store the first file, where the first file includes: the first media data, the gain data stream, the stream description information, a first check code associated with the gain data stream, and a second check code associated with the stream description information; where
the first check code is used to identify the associated gain data stream in the first file; and the second check code is used to identify the associated stream description information in the first file.

Optionally, the stream description information includes at least one of the following:
a target identifier of the gain data stream;
a type of the gain data stream;
a service corresponding to the gain data stream;
a size of the gain data stream;
a module using the first file;
a declaration entity of the gain data stream; and
attribute information of the gain data stream.

Optionally, the first file further includes: N and a third check code associated with N, where N is a positive integer; and
a value of N is the number of gain data streams in the first file, and the third check code is used to identify the associated N in the first file.

Optionally, in a case that N is an integer greater than 1, the first file includes the following information arranged in sequence:
the first media data, N first check codes and respective gain data streams, N second check codes and respective stream description information, the third check code, and the associated N.

Optionally, the media data processing apparatus 700 further includes:
a reading module configured to read the first file;
a second determining module configured to determine target gain stream data based on the third check code, the value of N, the N second check codes and respective stream description information, and the N first check codes and respective gain data streams;
a gain adjustment module configured to adjust a gain of the first media data based on the target gain stream data to obtain second media data; and
an output module configured to output the second media data.

Optionally, the second determining module includes:
a first reading unit configured to read N from the first file based on the third check code;
a second reading unit configured to read N second check codes from the first file;
a third reading unit configured to read, based on the N second check codes, target identifiers in the respective associated stream description information from the first file;
a selection unit configured to select a target gain data stream from the N gain data streams based on the target identifiers of the N gain data streams; and
a fourth reading unit configured to read the target gain data stream from the first file based on the first check code associated with the target gain data stream.

Optionally, the first file further includes extension information, where the extension information includes at least one of the following:
compatibility information with a historical version;
extended information;
a length of the extended information;
a fourth check code associated with the extended information, where the fourth check code is used to identify the associated extended information in the first file; and
a fifth check code, where the fifth check code is used to verify validity of the first file.

The media data processing apparatus 700 provided in the embodiment of this application can implement the steps of the method embodiment shown in FIG. 1 and the same or similar beneficial effects as the method embodiment shown in FIG. 1 can be achieved. To avoid repetition, details are not described herein again.

The media data processing apparatus in the embodiments of this application may be an electronic device or a component in an electronic device, such as an integrated circuit or a chip. The electronic device may be a terminal or another device different from a terminal. For example, the electronic device may be a mobile phone, a tablet personal computer, a laptop computer, a notebook computer, a palmtop computer, a vehicle-mounted electronic device, a mobile internet device (Mobile Internet Device, MID), an augmented reality (augmented reality, AR)/virtual reality (Virtual Reality, VR) device, a robot, a wearable device, an ultra-mobile personal computer (Ultra-mobile Personal Computer, UMPC), a netbook, a personal digital assistant (personal digital assistant, PDA), or the like, or may be a server, a network attached storage (Network Attached Storage, NAS), a personal computer (personal computer, PC), a television (television, TV), a teller machine, a self-service machine, or the like, which is not specifically limited in the embodiments of this application.

The media data processing apparatus in the embodiments of this application may be an apparatus having an operating system. The operating system may be an Android (Android) operating system, an iOS operating system, or other possible operating systems, which is not specifically limited in the embodiments of this application.

The media data processing apparatus provided in the embodiments of this application can implement the processes of the method embodiment shown in FIG. 1. To avoid repetition, details are not described herein again.

Optionally, as shown in FIG. 8, an embodiment of this application further provides an electronic device 800 including a processor 801 and a memory 802. The memory 802 stores a program or instructions capable of running on the processor 801, and when the program or instructions are executed by the processor 801, the steps of the foregoing media data processing method embodiments are implemented, with the same technical effects achieved. To avoid repetition, details are not described herein again.

It should be noted that the electronic device in the embodiment of this application includes the mobile electronic device and non-mobile electronic device described above.

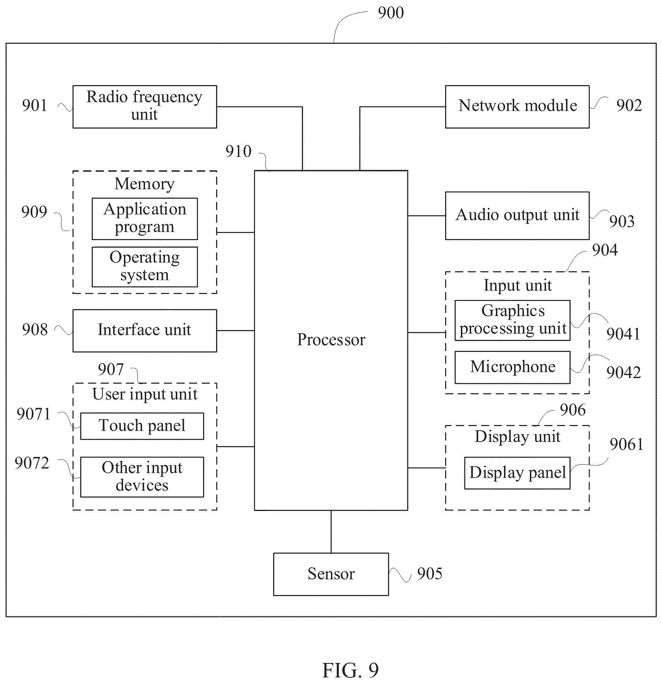

FIG. 9 is a schematic diagram of a hardware structure of an electronic device implementing an embodiment of this application.

The electronic device 900 includes, but is not limited to, components such as a radio frequency unit 901, a network module 902, an audio output unit 903, an input unit 904, a sensor 905, a display unit 906, a user input unit 907, an interface unit 908, a memory 909, and a processor 910.

Those skilled in the art can understand that the electronic device 900 may further include a power source (for example, a battery) for supplying power to various components. The power source may be logically connected to the processor 910 through a power management system, thereby implementing functions such as charge management, discharge management, and power consumption management through the power management system. The structure of the electronic device shown in FIG. 9 does not constitute a limitation on the electronic device, which may include more or fewer components than shown, or combine certain components, or have a different arrangement of components, which is not described herein.

The input unit 904 is configured to acquire first media data and a gain data stream;
the processor 910 is configured to determine stream description information of the gain data stream based on the gain data stream; and
the processor 910 is configured to generate a first file based on the first media data, the gain data stream, and the stream description information, and control the memory 909 to store the first file, where the first file includes: the first media data, the gain data stream, the stream description information, a first check code associated with the gain data stream, and a second check code associated with the stream description information; where
the first check code is used to identify the associated gain data stream in the first file; and the second check code is used to identify the associated stream description information in the first file.

Optionally, the stream description information includes at least one of the following:
a target identifier of the gain data stream;
a type of the gain data stream;
a service corresponding to the gain data stream;
a size of the gain data stream;
a module using the first file;
a declaration entity of the gain data stream; and
attribute information of the gain data stream.

Optionally, the first file further includes: N and a third check code associated with N, where N is a positive integer; and
a value of N is the number of gain data streams in the first file, and the third check code is used to identify the associated N in the first file.

Optionally, in a case that N is an integer greater than 1, the first file includes the following information arranged in sequence:
the first media data, N first check codes and respective gain data streams, N second check codes and respective stream description information, the third check code, and the associated N.

Optionally, after the processor 910 controls the memory 909 to store the first file, the processor 910 is further configured to:
read the first file;
determine target gain stream data based on the third check code, the value of N, the N second check codes and respective stream description information, and the N first check codes and respective gain data streams;
adjust a gain of the first media data based on the target gain stream data to obtain second media data; and
control the audio output unit 903 or the display unit 906 and the interface unit 908 to output the second media data.

Optionally, the determining, by the processor 910, target gain stream data based on the third check code, the value of N, the N second check codes and respective stream description information, and the N first check codes and respective gain data streams includes:
reading N from the first file based on the third check code;
reading N second check codes from the first file;
reading, based on the N second check codes, target identifiers in the respective associated stream description information from the first file;
selecting a target gain data stream from the N gain data streams based on the target identifiers of the N gain data streams; and
reading the target gain data stream from the first file based on the first check code associated with the target gain data stream.

Optionally, the first file further includes extension information, where the extension information includes at least one of the following:
compatibility information with a historical version;
extended information;
a length of the extended information;
a fourth check code associated with the extended information, where the fourth check code is used to identify the associated extended information in the first file; and
a fifth check code, where the fifth check code is used to verify validity of the first file.

It should be understood that in the embodiments of this application, the input unit 904 may include a graphics processing unit (Graphics Processing Unit, GPU) 9041 and a microphone 9042, where the graphics processing unit 9041 processes image data of a still image or a video obtained by an image capture device (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or an on/off key), a trackball, a mouse, and a joystick, which are not described herein.

The memory 909 may be configured to store software programs and various data. The memory 909 may mainly include a first storage area for storing a program or instructions and a second storage area for storing data. The first storage area may store an operating system, an application program or instructions required for at least one function (such as a sound play function or an image play function), and the like. Additionally, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 909 in the embodiment of this application includes but is not limited to these and any other suitable types of memory.

The processor 910 may include one or more processing units. Optionally, an application processor and a modem processor are integrated in the processor 910, where the application processor mainly handles operations related to an operating system, a user interface, an application program, and the like, and the modem processor, such as a baseband processor, mainly handles wireless communication signals. It can be understood that the modem processor may alternatively be not integrated into the processor 910.

An embodiment of this application further provides a readable storage medium. The readable storage medium stores a program or instructions, and when the program or instructions are executed by a processor, the processes of the foregoing media data processing method embodiments are implemented, with the same technical effects achieved. To avoid repetition, details are not described herein again.

The processor is the processor in the electronic device described in the above embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor, and the processor is configured to run a program or instructions to implement the processes of the foregoing media data processing method embodiments, with the same technical effects achieved. To avoid repetition, details are not described herein again.

It should be understood that the chip mentioned in the embodiment of this application may also be referred to as a system-level chip, a system chip, a chip system, a system-on-chip chip, or the like.

An embodiment of this application further provides a computer program product. The program product is stored in a storage medium, and the program product is executed by at least one processor to implement the processes of the foregoing media data processing method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a better implementation. The software product is stored in a storage medium (such as a ROM/RAM, a magnetic disk, or an optical disc), and includes several instructions for instructing a terminal (which may be a mobile phone, a computer, a server, or a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As inspired by this application, persons of ordinary skill in the art may develop many other manners without departing from principles of this application and the protection scope of the claims, and all such manners fall within the protection scope of this application.

## Claims

1. A media data processing method, comprising:
acquiring first media data and a gain data stream;
determining stream description information of the gain data stream based on the gain data stream; and
generating a first file based on the first media data, the gain data stream, and the stream description information, and storing the first file, wherein the first file comprises: the first media data, the gain data stream, the stream description information, a first check code associated with the gain data stream, and a second check code associated with the stream description information; wherein
the first check code is used to identify the associated gain data stream in the first file; and the second check code is used to identify the associated stream description information in the first file.

2. The method according to claim 1, wherein the stream description information comprises at least one of the following:
a target identifier of the gain data stream;
a type of the gain data stream;
a service corresponding to the gain data stream;
a size of the gain data stream;
a module using the first file;
a declaration entity of the gain data stream; and
attribute information of the gain data stream.

3. The method according to claim 1, wherein the first file further comprises: N and a third check code associated with N, and N is a positive integer; and
a value of N is the number of gain data streams in the first file, and the third check code is used to identify the associated N in the first file.

4. The method according to claim 3, wherein in a case that N is an integer greater than 1, the first file comprises the following information arranged in sequence:
the first media data, N first check codes and respective gain data streams, N second check codes and respective stream description information, the third check code, and the associated N.

5. The method according to claim 4, wherein after the storing the first file, the method further comprises:
reading the first file;
determining target gain stream data based on the third check code, the value of N, the N second check codes and respective stream description information, and the N first check codes and respective gain data streams;
adjusting a gain of the first media data based on the target gain stream data to obtain second media data; and
outputting the second media data.

6. The method according to claim 5, wherein the determining target gain stream data based on the third check code, the value of N, the N second check codes and respective stream description information, and the N first check codes and respective gain data streams comprises:
reading N from the first file based on the third check code;
reading N second check codes from the first file;
reading, based on the N second check codes, target identifiers in the respective associated stream description information from the first file;
selecting a target gain data stream from the N gain data streams based on the target identifiers of the N gain data streams; and
reading the target gain data stream from the first file based on the first check code associated with the target gain data stream.

7. The method according to any one of claims 1 to 6, wherein the first file further comprises extension information, wherein the extension information comprises at least one of the following:
compatibility information with a historical version;
extended information;
a length of the extended information;
a fourth check code associated with the extended information, wherein the fourth check code is used to identify the associated extended information in the first file; and
a fifth check code, wherein the fifth check code is used to verify validity of the first file.

8. A media data processing apparatus, comprising:
an acquisition module configured to acquire first media data and a gain data stream;
a first determining module configured to determine stream description information of the gain data stream based on the gain data stream; and
a data processing module configured to generate a first file based on the first media data, the gain data stream, and the stream description information, and store the first file, wherein the first file comprises: the first media data, the gain data stream, the stream description information, a first check code associated with the gain data stream, and a second check code associated with the stream description information; wherein
the first check code is used to identify the associated gain data stream in the first file; and the second check code is used to identify the associated stream description information in the first file.

9. The apparatus according to claim 8, wherein the stream description information comprises at least one of the following:
a target identifier of the gain data stream;
a type of the gain data stream;
a service corresponding to the gain data stream;
a size of the gain data stream;
a module using the first file;
a declaration entity of the gain data stream; and
attribute information of the gain data stream.

10. The apparatus according to claim 8, wherein the first file further comprises: N and a third check code associated with N, wherein N is a positive integer; and
a value of N is the number of gain data streams in the first file, and the third check code is used to identify the associated N in the first file.

11. The apparatus according to claim 10, wherein in a case that N is an integer greater than 1, the first file comprises the following information arranged in sequence:
the first media data, N first check codes and respective gain data streams, N second check codes and respective stream description information, the third check code, and the associated N.

12. The apparatus according to claim 11, further comprising:
a reading module configured to read the first file;
a second determining module configured to determine target gain stream data based on the third check code, the value of N, the N second check codes and respective stream description information, and the N first check codes and respective gain data streams;
a gain adjustment module configured to adjust a gain of the first media data based on the target gain stream data to obtain second media data; and
an output module configured to output the second media data.

13. The apparatus according to claim 12, wherein the second determining module comprises:
a first reading unit configured to read N from the first file based on the third check code;
a second reading unit configured to read N second check codes from the first file;
a third reading unit configured to read, based on the N second check codes, target identifiers in the respective associated stream description information from the first file;
a selection unit configured to select a target gain data stream from the N gain data streams based on the target identifiers of the N gain data streams; and
a fourth reading unit configured to read the target gain data stream from the first file based on the first check code associated with the target gain data stream.

14. The apparatus according to any one of claims 8 to 12, wherein the first file further comprises extension information, wherein the extension information comprises at least one of the following:
compatibility information with a historical version;
extended information;
a length of the extended information;
a fourth check code associated with the extended information, wherein the fourth check code is used to identify the associated extended information in the first file; and
a fifth check code, wherein the fifth check code is used to verify validity of the first file.

15. An electronic device, comprising a processor and a memory, wherein the memory stores a program or instructions capable of running on the processor, and when the program or instructions are executed by the processor, the steps of the media data processing method according to any one of claims 1 to 7 are implemented.

16. A readable storage medium, wherein the readable storage medium stores a program or instructions, and when the program or instructions are executed by a processor, the steps of the media data processing method according to any one of claims 1 to 7 are implemented.

17. A chip, wherein the chip comprises a processor and a communication interface, the communication interface is coupled to the processor, and the processor is configured to run a program or instructions to implement the method according to any one of claims 1 to 7.
